(19)

Europäisches Patentamt

European Patent Office

Office européen des brevets

(11) EP 0 686 795 B1

(12) **FASCICULE DE BREVET EUROPEEN**

(45) Date de publication et mention
de la délivrance du brevet:
**25.08.1999 Bulletin 1999/34**

(51) Int Cl.⁶: **F16K 17/30**

(21) Numéro de dépôt: **94401305.1**

(22) Date de dépôt: **10.06.1994**

(54) **Dispositif de coupure d'alimentation en gaz naturel**

Schliessvorrichtung für Erdgasleitungen

Device to interrupt a natural gas supply

(84) Etats contractants désignés:
AT BE CH DE ES GB GR IT LI LU NL SE

(43) Date de publication de la demande:
**13.12.1995 Bulletin 1995/50**

(73) Titulaire: **Colovret, Suzanne**
**F-28800 Saumeray (FR)**

(72) Inventeur: **Colovret, Suzanne**
**F-28800 Saumeray (FR)**

(56) Documents cités:
WO-A-92/01184          FR-A- 954 743
FR-A- 2 268 208       FR-A- 2 703 133
US-A- 3 842 858       US-A- 4 590 962

## Description

La présente invention a pour objet de couper automatiquement l'arrivée de gaz entre la canalisation principale et les conduits d'alimentation sous pression moyennement élevée en vue de la distribution de gaz à divers usagers dans le cas où le débit dépasse l'utilisation normale.

Ces dépassements accidentels de débit peuvent être occasionnés par arrachement ou perforation de la canalisation au cours de travaux de terrassement ou incidents sur l'installation de l'utilisateur, de tels incidents peuvent être source de danger et provoquer une surconsommation de gaz.

La présente invention vise à remédier de manière instantanée aux inconvénients précités en coupant l'arrivée du gaz à un débit défini et constant quelque soit les pressions, spécificité restant unique par rapport aux autres dispositifs de coupure tel que celui décrit à la demande de brevet WO92/01 184.

L'invention vise encore à être facilement intégrable, de faible encombrement, de fonctionnement autonome pouvant être enterrée à faible coût d'installation.

Ces buts sont atteints grâce à un dispositif de coupure instantannée d'arrivée d'un fluide gazeux dans la portion de conduite d'alimentation reliant l'usager, tel que défini dans la revendication 1 du brevet. En cas de débit maximal prédéterminé et quelque soit la pression de gaz, l'ensemble constitué du clapet et de l'ogive, se déplacera pour s'appuyer sur le siège obturant ainsi l'orifice de passage du fluide.

Selon un mode de réalisation avantageux, le dit système comprend un ressort hélicoïdal de charge prédéterminée et de faible raideur exerçant une force sur l'ogive à section fixe soumise à une différence de pression engendrée par une perte de charge en fonction du débit du fluide gazeux.

La charge fixe du ressort peut être prédéterminée de manière à obtenir la valeur désirée de la perte de charge de la pression en fonction du débit du fluide gazeux.

Cette perte de charge est créée par le débit du fluide gazeux au travers d'une section de passage entre l'ogive et le logement conique.

D'une manière générale, l'utilisation de ce système en fonctionnement normal de l'utilisateur permet d'obtenir de faibles pertes de charge de pression, compatibles avec un bon fonctionnement de l'installation et dans le cas d'un dépassement du débit du fluide gazeux préalablement déterminé, une coupure instantanée de l'alimentation du gaz par le positionnement de l'ogive et du clapet sur le siège, obturant ainsi l'orifice du siège, empêchant tout passage du fluide gazeux.

Lors d'un dépassement du débit du fluide gazeux dû à un incident sur la canalisation reliant la canalisation principale à celle de l'usager, le système obture l'orifice du siège empêchant ainsi tout passage du fluide gazeux; il restera dans cette position jusqu'à intervention et remise en état de l'installation.

Pour que le système revienne à une position permettant le fonctionnement normal de l'installation, il faut impérativement un rééquilibrage des pressions dans la canalisation principale et celle reliant l'usager de part et d'autre de l'ogive, seule condition pour que le ressort remette l'ogive en position de fonctionnement normal de l'installation, trois procédures sont envisagées :

a) injection, dans la canalisation reliant l'usager, de gaz à une pression au moins égale à celle de la canalisation principale;

b) utilisation en dérivation du dispositif de sécurité d'une tuyauterie de faible diamètre munie d'une vanne manuelle extérieure reliant la canalisation principale à celle reliant l'usager afin de rééquilibrer la pression dans les deux canalisations par ouverture de la vanne manuelle extérieure;

c) rééquilibrage automatique de pression entre la canalisation principale et celle reliant l'usager par une communication très faible située dans le clapet, dans le cas où la canalisation de l'usager se trouve à nouveau parfaitement étanche (débit nul). Rééquilibrage des pressions à débit constant quelque soit la pression de gaz dans la canalisation principale.

D'autres caractéristiques de l'invention ressortiront de la description suivante, en référence aux dessins annexés, sur lesquels :

- la figure 1 est une vue schématique d'une installation d'alimentation en gaz à laquelle est ajoutée le dispositif de sécurité de coupure de gaz en maximum de débit selon l'invention;

- la figure 2 est une vue schématique en coupe d'un mode de réalisation particulier du dispositif de sécurité selon l'invention (en fonction d'une pression et à un débit normal d'utilisation);

- la figure 3 est une vue schématique en coupe du dispositif de sécurité lorsque le débit de fluide gazeux se trouve en dépassement du débit du fluide gazeux préalablement déterminé, le clapet (13) en appui sur le siège (17);

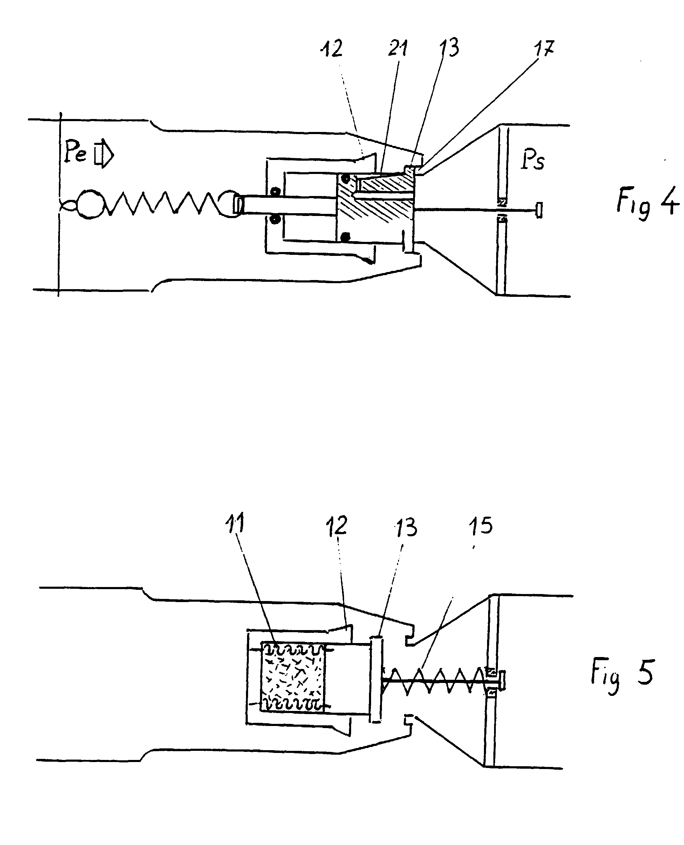

- la figure 4 est une vue schématique en coupe du dispositif de sécurité selon l'invention avec la communication (21) située dans le clapet (13) en appui sur le siège (17). La communication (21) est limitée par le positionnement de l'ogive (12) en fonction de la pression (Pe) permet le rééquilibrage automatique de la pression (Ps). A débit faible et constant, quelque soit la pression de gaz (Pe), le débit est défini par une section de passage (21) variable en fonction de la position de l'ogive (12) sur le clapet (13) sous l'effet de la pression de gaz (Pe);

- la figure 5 est une vue schématique en coupe d'un autre mode de réalisation du dispositif de sécurité selon l'invention, montrant d'autres dispositifs d'étanchéité (11) entre l'ogive (12) et le clapet (13) et l'utilisation d'un ressort de compression (15).

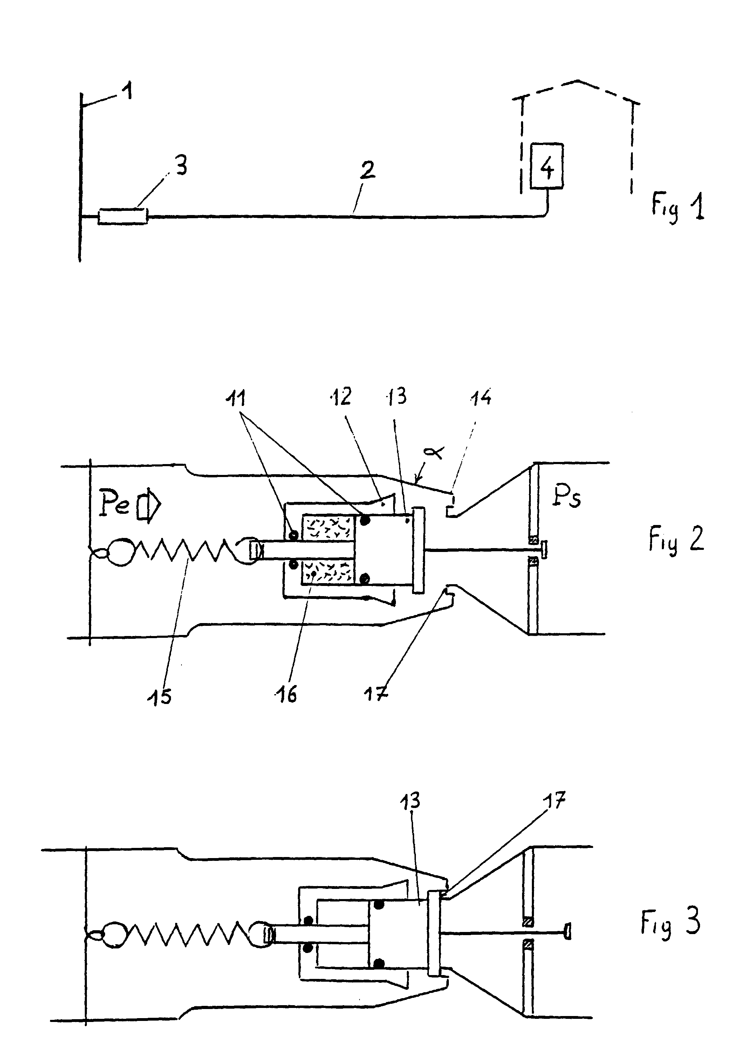

La figure 1 représente le schéma d'une installation d'alimentation en gaz naturel des appareils d'utilisation (4). Une canalisation principale (1) gérée par GAZ de FRANCE sur une zone protégée administrativement.Une canalisation (2) sur une zone à risque, ex. : arrachement ou perforation de la canalisation au cours de travaux de terrassement. Des appareils d'utilisation (4) sur lesquels peuvent survenir des incidents de fonctionnement, ex. : incendie ou rupture d'une conduite de gaz. Un dispositif de sécurité (3) inséré entre la canalisation principale (1) et la canalisation (2), dispositif autonome devant être enterré, son fonctionnement ne nécessitant pas une intervention manuelle, conçu dans des matières résistantes et inoxydable. Ce dispositif de sécurité (3) doit couper instantanément l'arrivée de gaz en cas d'incidents sur la canalisation (2) et sur les appareils d'utilisation (4) de l'usager. En outre, ce dispositif ne doit pas gêner le fonctionnement de l'installation par des pertes de charges excessives de la pression de gaz d'alimentation.

On décrit maintenant en référence à la figure 2, un exemple de réalisation d'un dispositif de coupure immédiate d'arrivée de gaz en cas d'incidents sur la canalisation (2) selon l'invention.

Selon cet exemple, le dispositif (3) comprend un corps rigide (14) comportant un logement conique d'angle α et un siège (17). Une ogive (12) d'une section définie montée sur un clapet (13) avec des joints toriques d'étanchéité (11), pouvant être remplacé par une membrane métallique ou élastomère, enferme un gaz compressible (16) soumis à la loi :

$$\frac{P \times V}{T} = \text{constante},$$

(P : pression, V : volume, T : température du gaz pratiquement constante dans les canalisations enterrées). L'ogive (12) se positionne sur le clapet (13) en fonction de l'équilibre des pressions entre le gaz (Pe) et le gaz enfermé (16). Pour chaque pression de gaz (Pe), l'ogive (12) aura une position dans le logement conique d'angle α définie pour que la section de passage entre l'ogive (12) et le logement conique corresponde à un débit prédéterminé et constant quelque soit la pression de gaz (Pe), provoquant la coupure d'alimentation en gaz. Le clapet (13) est réalisé pour assurer la meilleurs étanchéité sur le siège (17). Un ressort hélicoïdal (15), en jonction entre le clapet (13) et le corps rigide (14), transmet une charge fixe prédéterminée sur le clapet (13).

Les figures 2 et 3 représentent deux exemples de fonctionnement.

La figure 2 représente une position de l'ogive (12) sur le clapet (13) définie par une pression et un débit normal d'utilisation.

La figure 3 représente la mise en sécurité du dispositif par la position du clapet (13) en appui sur le siège (17) assurant l'arrêt de la distribution du gaz dans la canalisation (2), dans le cas d'un dépassement du débit maximum d'utilisation normale.

## Revendications

1. Dispositif de coupure d'alimentation en gaz naturel, à débit constant quelle que soit la pression du gaz, dans les canalisations enterrées d'alimentation des locaux d'habitation dans le cas où le débit dépasse l'utilisation normale, constitué d'un corps rigide (14) comportant un logement conique délimité à sa partie la plus étroite par un siège (17) au travers duquel la totalité du gaz doit passer, d'une ogive (12) d'une section définie montée sur un clapet (13) avec des points d'étanchéité (11) enfermant un gaz compréssible (16) soumis à la loi

$$\frac{P \times V}{T} = \text{constante}$$

P étant la pression, V étant le volume et T étant la température laquelle est pratiquement constante dans les canalisations enterrées, le diamètre du clapet (13) étant supérieur au diamètre de l'orifice du siège (17), et d'un ressort (15) en jonction entre le clapet (13) et le corps rigide (14) transmettant une charge fixe prédéterminée sur le clapet (13), l'ogive (12) se positionnant sur le clapet (13) en fonction de l'équilibre des pressions entre le gaz (Pe) à l'entrée du dispositif et le gaz enfermé (16) de telle sorte que pour chaque pression de gaz (Pe) à l'entrée, l'ogive (12) a dans le logement conique une position telle que la section de passage entre l'ogive (12) et le logement conique corresponde à un débit prédéterminé et constant quelque soit la pression de gaz (Pe) à l'entrée.

2. Dispositif selon la revendication 1, caractérisé en ce que la position du clapet (13), en appui sur le siège (17), obture l'orifice du siège (17), coupant l'alimentation en gaz de l'utilisation en cas de dépassement de débit normal de consommation de gaz.

3. Dispositif selon la revendication 1, caractérisé en ce que la charge fixe du ressort (15) prédétermine la valeur de la perte de charge entre la pression (Pe) à l'entrée et la pression (Ps) à la sortie agissant sur l'ensemble constitué de l'ogive (12) et du clapet (13), obligeant le clapet (13) à se positionner sur le siège (17).

4. Dispositif selon la revendication 1, caractérisé en ce que ledit dispositif entièrement autonome (sans intervention manuelle), conçu dans des matières résistantes et inoxydables, peut être enterré.

5. Dispositif selon la revendication 4, caractérisé en ce qu'il comporte une communication permanente (21) entre une canalisation principale (1) et la canalisation d'alimentation (2), à débit faible et constant, quelle que soit la pression de gaz (Pe) à l'entrée, débit défini par une section de passage (21) variable en fonction de la position de l'ogive (12) sur le clapet (13) sous l'effet de la pression de gaz (Pe).

6. Dispositif selon la revendication 1, caractérisé en ce que le ressort de traction (15) peut être remplacé par un ressort de compression (15) remplissant les mêmes fonctions.

7. Dispositif selon la revendication 1, caractérisé en ce que l'étanchéïté par joints toriques (11) peut être remplacée par une membrane métallique ou élastomère (11).

**Patentansprüche**

1. Vorrichtung zur Unterbrechung der Zufuhr von Erdgas mit vom Gasdruck unabhängigem konstantem Durchsatz in unterirdischen Rohrleitungen zur Versorgung von Haushalten für den Fall, daß der Durchsatz die normale Auslastung überschreitet, bestehend aus einem starren Körper (14) der eine konische Lagerung umfaßt, die an ihrem engsten Abschnitt von einem Sitz (17) begrenzt ist, an dem das gesamte Gas vorbeigeleitet werden muß, einem Spitzkegel (12) mit definiertem Querschnitt, der auf einer Klappe (13) montiert ist, die Gassperrstellen (11) aufweist, die ein komprimierbares Gas (16) einschließen, für das gilt:

$$\frac{P \cdot X \cdot V}{T} = \text{konstant}$$

wobei P der Druck, V das Volumen und T die Temperatur ist, die in unterirdischen Rohrleitungen praktisch konstant ist, wobei der Durchmesser der Klappe (13) größer ist als der Durchmesser der Öffnung des Sitzes (17), sowie eine Feder (15) als Verbindung zwischen der Klappe (13) und dem starren Körper (14), die auf den Spitzkegel (13) eine vorbestimmte fixe Belastung überträgt, wobei der Spitzkegel (12) in Abhängigkeit vom Druckgleichgewicht zwischen dem Gas (Pe) am Eingang der Vorrichtung und dem eingeschlossenen Gas (16) so auf der Klappe (13) angeordnet ist, daß der Spitzkegel (12) in der konischen Lagerung für jeden Gasdruck (Pe) am Eingang eine solche Position einnimmt, daß der Durchgangsquerschnitt zwischen dem Spitzkegel (12) und der konischen Lagerung unabhängig vom Gasdruck (Pe) am Eingang einem vorbestimmten und konstanten Durchsatz entspricht.

2. Vorrichtung nach Anspruch 1, dadurch gekennzeichnet, daß die Position der Klappe (13), wenn sie auf dem Sitz (17) aufliegt, die Öffnung des Sitzes (17) verschließt, wodurch die Gasleitung von der Nutzung abgeschnitten wird, wenn der Durchsatz den normalen Gasverbrauch überschreitet.

3. Vorrichtung nach Anspruch 1, dadurch gekennzeichnet, daß die fixe Belastung der Feder (15) den Wert des Belastungsverlust zwischen dem Druck (Pe) am Eingang und dem Druck (Ps) am Ausgang vorbestimmt, der auf die aus dem Spitzkegel (12) und der Klappe (13) bestehenden Anordnung einwirkt, wodurch die Klappe (13) dazu gezwungen ist, sich auf dem Sitz (17) anzuordnen.

4. Vorrichtung nach Anspruch 1, dadurch gekennzeichnet, daß die vollständig autonome Vorrichtung (ohne manuelles Eingreifen), die aus widerstandsfähigen und oxidationsbeständigen Materialien besteht, unterirdisch verlegt werden kann.

5. Vorrichtung nach Anspruch 4, dadurch gekennzeichnet, daß sie eine permanente Verbindung (21) zwischen einer Hauptrohrleitung (1) und einer Versorgungsrohrleitung (2) umfaßt, die unabhängig vom Gasdruck (Pe) am Eingang einen geringen und konstanten Durchsatz aufweist, der durch einen Durchgangsquerschnitt (21) definiert ist, der in Abhängigkeit von der Position des Spitzkegels (12) auf der Klappe (13) unter der Einwirkung des Gasdrucks (Pe) variabel ist.

6. Vorrichtung nach Anspruch 1, dadurch gekennzeichnet, daß die Zugfeder (15) durch eine Druckfeder (15) ersetzt sein kann, welche die gleichen Funktionen erfüllt.

7. Vorrichtung nach Anspruch 1, dadurch gekennzeichnet, daß die Dichtung mittels O-Ringen (11) durch eine Metall- oder Elastomermembran (11) ersetzt sein kann.

**Claims**

1. A device for interrupting a natural-gas supply, of constant flow rate whatever the pressure of the gas, in the buried pipe systems supplying housing spaces in the event that the flow rate exceeds normal use, consisting of a rigid body (14) comprising a conical housing defined at its narrowest part by a seat (17) across which all the gas has to pass, a bush (12) of a defined section mounted on a valve (13) with gaskets (11) enclosing a compressible gas (16) which is subject to the law

$$\frac{P \times V}{T} = \text{constant}$$

P being the pressure, V being the volume and T being the temperature, which is practically constant in the buried pipe systems, the diameter of the valve (13) being greater than the diameter of the orifice of the seat (17), and of a spring (15) at the junction between the valve (13) and the rigid body (14) transmitting a predetermined fixed load to the valve (13), the bush (12) being positioned on the valve (13) according to the equilibrium of the pressures between the gas (Pe) at the inlet to the device and the enclosed gas (16) such that for each gas pressure (Pe) at the inlet the bush (12) has in the conical housing a position such that the passage cross-section between the bush (12) and the conical housing corresponds to a predetermined constant flow rate, no matter what the gas pressure (Pe) at the inlet.

2. A device according to Claim 1, characterised in that the position of the valve (13) bearing on the seat (17) blocks the orifice of the seat (17), interrupting the supply of gas being used in the event that the normal rate of gas consumption is exceeded.

3. A device according to Claim 1, characterised in that the fixed load of the spring (15) predetermines the value of the loss of pressure between the pressure (Pe) at the inlet and the pressure (Ps) at the outlet acting on the unit consisting of the bush (12) and the valve (13), forcing the valve (13) to be positioned on the seat (17).

4. A device according to Claim 1, characterised in that said device, which is entirely autonomous (without manual intervention), made of resistant, inoxidisable materials, can be buried.

5. A device according to Claim 4, characterised in that it comprises a permanent communication (21) between a main pipe system (1) and the feed pipe system (2), of low, constant flow rate, whatever the pressure of gas (Pe) at the inlet, which flow rate is defined by a passage cross-section (21) which is variable according to the position of the bush (12) on the valve (13) under the action of the gas pressure (Pe).

6. A device according to Claim 1, characterised in that the extension spring (15) may be replaced by a compression spring (15) fulfilling the same functions.

7. A device according to Claim 1, characterised in that the sealing by means of O-rings (11) may be replaced by a metallic or elastomeric membrane (11).

1

3          2          4

Fig 1

11   12   13   14

Pe ▷          α

Ps

Fiy 2

15   16   17

13          17

Fig 3

Fig 4

Fig 5